(19) 
**Europäisches Patentamt**
**European Patent Office**
**Office européen des brevets**

(11) **EP 4 386 908 A1**

(12) 
# EUROPEAN PATENT APPLICATION
published in accordance with Art. 153(4) EPC

(43) Date of publication:
**19.06.2024 Bulletin 2024/25**

(21) Application number: **21953174.6**

(22) Date of filing: **13.08.2021**

(51) International Patent Classification (IPC):
**H01M 4/62** *(2006.01)* **H01M 4/133** *(2010.01)*

(52) Cooperative Patent Classification (CPC):
**Y02E 60/10**

(86) International application number:
**PCT/CN2021/112520**

(87) International publication number:
**WO 2023/015561 (16.02.2023 Gazette 2023/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Ningde, Fujian 352100 (CN)**

(72) Inventors:
- ZHENG, Qiang
  Ningde, Fujian 352100 (CN)
- ZHANG, Huibin
  Ningde, Fujian 352100 (CN)
- GAO, Chao
  Ningde, Fujian 352100 (CN)

(74) Representative: **Icosa**
**83 avenue Denfert-Rochereau**
**75014 Paris (FR)**

(54) **ELECTROCHEMICAL DEVICE AND ELECTRONIC DEVICE**

(57) This application relates to an electrochemical apparatus and an electronic apparatus including the electrochemical apparatus. The electrochemical apparatus of this application includes a negative electrode, and the negative electrode includes a porous carbon material layer and a negative electrode active material layer, where the porous carbon material layer includes porous carbon material particles, the porous carbon material particle includes at least two types of pores among micropores, mesopores, and macropores, and the at least two types of pores communicate with each other, where a pore size of the micropore < 2 nm, 2 nm ≤ a pore size of the mesopore ≤ 50 nm, and 50 nm < a pore size of the macropore ≤ 500 nm. The electrochemical apparatus of this application has excellent high-rate charging performance and cycling performance.

FIG. 1

EP 4 386 908 A1

**Description**

**TECHNICAL FIELD**

This application relates to the energy storage field, and specifically, to an electrochemical apparatus and an electronic apparatus.

**BACKGROUND**

With many advantages such as high energy density, long cycle life, low self-discharge, no memory effect, and environmental friendliness, lithium-ion batteries have been widely used in the field of consumer electronics including smart phones, smart bracelets, digital cameras, notebook computers, and the like. A lithium-ion battery is mainly made up of components such as a positive electrode, a negative electrode, an electrolyte, and a separator. The selection of negative electrode materials will directly affect the energy density and fast charging performance of the battery. The existing negative electrode materials include metal lithium, graphite, soft carbon, hard carbon, and alloys such as silicon and tin. Graphite dominates the market of negative electrode materials for lithium-ion batteries due to advantages such as low and stable lithiation potential (0.01 V to 0.2 V), stable cycling performance, low price, and environmental friendliness. However, graphite has a low theoretical specific capacity (372 mAh/g). Being anisotropic, graphite impedes the intercalation of lithium ions from all directions, limiting the intercalation speed of lithium ions. Restricted by the structural properties of the material, the gram capacity of the graphite material is gradually reaching a limit, and the rate performance or fast charging performance can no longer meet the growing performance requirements of downstream products for electrode assemblies.

**SUMMARY**

In view of the problems existing in the prior art, this application provides an electrochemical apparatus that has excellent high-rate charging performance and good cycling performance.

A first aspect of this application provides an electrochemical apparatus, where the electrochemical apparatus includes a negative electrode, and the negative electrode includes a porous carbon material layer and a negative electrode active material layer. The porous carbon material layer includes porous carbon material particles, the porous carbon material particle includes at least two types of pores among micropores, mesopores, and macropores, and the at least two types of pores communicate with each other, where a pore size of the micropore < 2 nm, 2 nm $\leq$ a pore size of the mesopore $\leq$ 50 nm, and 50 nm < a pore size of the macropore $\leq$ 500 nm.

In this application, the porous carbon material particles in the porous carbon material layer have a composite porous structure with two or more levels, for example, micropore-mesopore, micropore-mesopore-macropore, and micropore-macropore. Different types of pores at least partially communicate with each other, so that lithium ions can be diffused by way of macropores and mesopores. Macropores and mesopores have a wide diffusion channel and can reduce the diffusion resistance for lithium ions entering micropores, thereby alleviating the problem of lithium precipitation on the surface of a high-capacity active material layer and effectively improving the high-rate fast charging performance of the electrochemical apparatus. This achieves an advantageous combination of high capacity, high energy density, and fast charging performance.

According to some embodiments of this application, the porous carbon material particle includes micropores and mesopores, where the micropores and mesopores at least partially communicate with each other. According to some embodiments of this application, the porous carbon material particle includes micropores and macropores, where the micropores and macropores communicate with each other. According to some embodiments of this application, the porous carbon material particle includes mesopores and macropores, where the mesopores and macropores communicate with each other. According to some embodiments of this application, the porous carbon material particle includes micropores, mesopores, and macropores, where the micropores, mesopores, and macropores communicate with each other. In other words, micropores communicate with mesopores, micropores communicate with macropores, and macropores communicate with mesopores.

According to some embodiments of this application, V1/(V1+V2+V3) $\leq$ 20% is satisfied, where V1 in $cm^3/g$ is a pore volume of the micropores in the porous carbon material particle, V2 in $cm^3/g$ is a pore volume of the mesopores in the porous carbon material particle, and V3 in $cm^3/g$ is a pore volume of the macropores in the porous carbon material particle. In this application, when V1/(V1+V2+V3) $\leq$ 20%, a proportion of lithium storage sites in the micropores decreases. Compared with hard carbon, the porous carbon material particles do not have an obvious low-voltage plateau and are less likely to generate lithium dendrites during charging at a high current. In some embodiments of this application, 1% < V1/(V1+V2+V3) < 20%. In some embodiments of this application, V1/(V1+V2+V3) < 10%.

According to some embodiments of this application, the negative electrode active material layer includes negative electrode active material particles. The negative electrode active material particle includes at least two types of pores among micropores, mesopores, and macropores, and $V1/(V1+V2+V3) < P1/(P1+P2+P3)$ is satisfied, where a pore size of the micropore < 2 nm, 2 nm $\leq$ a pore size of the mesopore $\leq$ 50 nm, and 50 nm < a pore size of the macropore $\leq$ 500 nm; V1 in $cm^3/g$ is a pore volume of the micropores in the porous carbon material particle, V2 in $cm^3/g$ is a pore volume of the mesopores in the porous carbon material particle, and V3 in $cm^3/g$ is a pore volume of the macropores in the porous carbon material particle; P1 in $cm^3/g$ is a pore volume of the micropores in the negative electrode active material particle, P2 in $cm^3/g$ is a pore volume of the mesopores in the negative electrode active material particle, and P3 in $cm^3/g$ is a pore volume of the macropores in the negative electrode active material particle.

In this application, a proportion of micropores in the porous carbon material particle is lower than that of micropores in the negative electrode active material particle. This facilitates diffusion of lithium ions from the porous carbon material layer to the negative electrode active material layer, alleviating lithium precipitation on the surface of a negative electrode plate. An excessively high proportion of micropores in the porous carbon material particle is not conducive to the diffusion of lithium ions to the negative electrode active material layer, thereby causing lithium precipitation.

According to some embodiments of this application, $P1/(P1+P2+P3) > 25\%$. Controlling the proportion of micropores in the negative electrode active material particle helps achieve a balance between lithium storage capacity and ion diffusion rate and fast charging capability.

According to some embodiments of this application, the negative electrode satisfies at least one of the following conditions (a) to (d):

(a) coating mass per unit area of the porous carbon material layer is less than coating mass per unit area of the negative electrode active material layer;
(b) thickness of the porous carbon material layer is less than thickness of the negative electrode active material layer;
(c) the porous carbon material particle includes one or more selected from the group consisting of activated carbon, hard carbon, soft carbon, carbon fiber, and carbon nanotubes; or
(d) the negative electrode active material layer includes negative electrode active material particles, where the negative electrode active material particle includes one or more of hard carbon and graphite.

According to some embodiments of this application, coating mass per unit area of the porous carbon material layer is less than coating mass per unit area of the negative electrode active material layer. Compacted density is one of the key parameters that affect the volumetric energy density of an electrode assembly. To achieve a higher volumetric energy density, the electrode plate should have a high compacted density. In this application, mass of the porous carbon material layer is less than that of the negative electrode active material layer. This helps increase the overall compacted density of a composite layer (the porous carbon material layer plus the negative electrode active material layer) while lessening the impact on the fast charging performance and cycling performance of the electrochemical apparatus. In some embodiments of this application, the porous carbon material layer includes porous carbon material particles, and the negative electrode active material layer includes hard carbon. The porous carbon material layer is made of a porous carbon material with multi-level porous structure where different types of pores at least partially communicate with each other, so that lithium ions can be diffused by way of macropores and mesopores. Macropores and mesopores have a wide diffusion channel and reduce the diffusion resistance for lithium ions entering micropores, improving the high-rate fast charging performance and retarding lithium precipitation on the surface of the electrode plate. Therefore, the porous carbon material layer is superior to the negative electrode active material of hard carbon layer in terms of diffusion kinetics or fast charging performance. This significantly alleviates the problem of lithium precipitation during fast charging for a negative electrode made of single-layer hard carbon, and achieves an advantageous combination of high capacity, high energy density, and fast charging performance. In addition, when lithium precipitation on the surface of the electrode plate is alleviated, the fast charging performance is improved, and deformation of the electrode assembly is suppressed, improving the appearance and safety performance of the electrochemical apparatus.

According to some embodiments of this application, the negative electrode further includes a negative electrode current collector, and the negative electrode active material layer is located between the porous carbon material layer and the negative electrode current collector.

According to some embodiments of this application, the negative electrode further includes a conductive layer located between the negative electrode active material layer and the negative electrode current collector. In some embodiments, the conductive layer includes a conductive material, where the conductive material includes one or more selected from the group consisting of conductive carbon black, carbon nanofibers, carbon nanotubes, and graphene. With the conductive layer being provided between the negative electrode active material layer and the negative electrode current collector, the adhesion force between the negative electrode active material layer and the negative electrode current collector can be improved, improving the electrical contact.

According to some embodiments of this application, the electrochemical apparatus of this application further includes a separator, and the porous carbon material layer is located between the separator and the negative electrode active material layer.

According to some embodiments of this application, the electrochemical apparatus of this application further includes a separator, where the porous carbon material layer is in contact with the separator.

A second aspect of this application provides an electronic apparatus including the electrochemical apparatus according to the first aspect.

In this application, the porous carbon material layer is provided on the negative electrode, so that a special porous structure of the porous carbon material particles is utilized to effectively facilitate the diffusion of lithium ions in the negative electrode active material layer. This alleviates the problem that lithium precipitation tends to occur on the surface of the negative electrode active material layer during charging at a high rate and reduces lithium precipitation on the negative electrode plate, effectively improving the high-rate fast charging performance of the electrochemical apparatus, and achieving an advantageous combination of high capacity, high energy density, and fast charging performance. In addition, when lithium precipitation on the surface of the electrode plate is alleviated, the fast charging performance is improved, and deformation of the electrode assembly is suppressed, improving the appearance and safety performance of the electrochemical apparatus.

## BRIEF DESCRIPTION OF DRAWINGS

FIG. 1 is a schematic structural diagram of a negative electrode plate according to some embodiments of this application, where 1 represents a porous carbon material layer, 2 represents an active material layer, and 3 represents a current collector.

FIG. 2 is a schematic structural diagram of a wound lithium-ion battery according to some embodiments of this application, where 4 represents a positive electrode, 5 represents a separator, 6 represents a negative electrode, 7 represents a positive electrode tab, and 8 represents a negative electrode tab.

FIG. 3 is an enlarged view of part A shown in FIG. 2, where 61 represents a porous carbon material layer, 62 represents a negative electrode active material layer, and 63 represents a negative electrode current collector.

FIG. 4 is a charging curve of a negative electrode made of a hard carbon material according to Embodiment 1 of this application.

FIG. 5 is a charging curve of a negative electrode made of a porous carbon material according to Embodiment 1 of this application.

FIG. 6 is a schematic structural diagram of a porous carbon material particle according to some embodiments of this application.

## DETAILED DESCRIPTION

Some embodiments of this application are described in detail below. Some embodiments of this application should not be construed as limitations on the application.

The term "approximately" used herein is intended to describe and represent small variations. When used in combination with an event or a circumstance, the term may refer to an example in which the exact event or circumstance occurs or an example in which an extremely similar event or circumstance occurs. For example, when used in combination with a value, the term may refer to a variation range of less than or equal to $\pm10\%$ of the value, for example, less than or equal to $\pm5\%$, less than or equal to $\pm4\%$, less than or equal to $\pm3\%$, less than or equal to $\pm2\%$, less than or equal to $\pm1\%$, less than or equal to $\pm0.5\%$, less than or equal to $\pm0.1\%$, or less than or equal to $\pm0.05\%$. In addition, quantities, ratios, and other values are sometimes presented in the format of ranges in this specification. It should be understood that such range formats are used for convenience and simplicity and should be flexibly understood as including not only values clearly designated as falling within the range but also all individual values or sub-ranges covered by the range as if each value and sub-range are clearly designated.

A list of items preceded by the term "at least one of" may mean any combination of the listed items. For example, if items A and B are listed, the phrase "at least one of A and B" means only A; only B; or A and B. In another example, if items A, B, and C are listed, the phrase "at least one of A, B, and C" means only A; only B; only C; A and B (exclusive of C); A and C (exclusive of B); B and C (exclusive of A); or all of A, B, and C. The item A may contain a single element or a plurality of elements. The item B may contain a single element or a plurality of elements. The item C may contain a single element or a plurality of elements.

In this specification, reference to "an embodiment", "some embodiments", "one embodiment", "another example", "an example", "a specific example", or "some examples" means that at least one embodiment or example in this application includes a specific feature, structure, material, or characteristic described in this embodiment or example. Therefore, descriptions in various places throughout this specification, such as "in some embodiments", "in the embodiments", "in an embodiment", "in another example", "in an example", "in a specified example", or "examples" do not necessarily refer to the same embodiment or example in this application. In addition, a specified feature, structure, material, or characteristic herein may be combined in any appropriate manner in one or more embodiments or examples.

A first aspect of this application provides an electrochemical apparatus, where the electrochemical apparatus includes a negative electrode, and the negative electrode includes a porous carbon material layer and a negative electrode active material layer. The porous carbon material layer includes porous carbon material particles, the porous carbon material particle includes at least two types of pores among micropores, mesopores, and macropores, and the at least two types of pores communicate with each other, where a pore size of the micropore < 2 nm, 2 nm ≤ a pore size of the mesopore ≤ 50 nm, and 50 nm < a pore size of the macropore ≤ 500 nm.

In this application, the porous carbon material particles in the porous carbon material layer have a composite porous structure with two or more levels, for example, micropore-mesopore, micropore-mesopore-macropore, and micropore-macropore. Different types of pores at least partially communicate with each other, so that lithium ions can be diffused by way of macropores and mesopores. Macropores and mesopores have a wide diffusion channel and can reduce the diffusion resistance for lithium ions entering micropores, thereby alleviating the problem of lithium precipitation on the surface of a high-capacity negative electrode active material layer and effectively improving the high-rate fast charging performance of the electrochemical apparatus. This achieves an advantageous combination of high capacity, high energy density, and fast charging performance.

According to some embodiments of this application, the porous carbon material particle includes micropores and mesopores, where the micropores and mesopores at least partially communicate with each other. According to some embodiments of this application, the porous carbon material particle includes micropores and macropores, where the micropores and macropores at least partially communicate with each other. According to some embodiments of this application, the porous carbon material particle includes mesopores and macropores, where the mesopores and macropores at least partially communicate with each other. According to some embodiments of this application, the porous carbon material particle includes micropores, mesopores, and macropores, where the micropores, mesopores, and macropores at least partially communicate with each other. That is, micropores communicate with mesopores at least partially, micropores communicate with macropores at least partially, and macropores communicate with mesopores at least partially.

It should be understood that in this application, micropores may also communicate with each other, mesopores may also communicate with each other, and macropores may also communicate with each other.

According to some embodiments of this application, at least 50% of the at least two types of pores communicate with each other, for example, at least 60%, at least 70%, at least 80%, or at least 90%.

According to some embodiments of this application, a pore size D1 of micropores is < 2 nm. According to some embodiments of this application, a pore size D2 of mesopores satisfies 2 nm ≤ D2 ≤ 50 nm. According to some embodiments of this application, a pore size D3 of macropores satisfies 50 nm < D3 ≤ 500 nm.

According to some embodiments of this application, V1/(V1+V2+V3) ≤ 20% is satisfied, where V1 in cm$^3$/g is a pore volume of the micropores in a single porous carbon material particle, V2 in cm$^3$/g is a pore volume of the mesopores in a single porous carbon material particle, and V3 in cm$^3$/g is a pore volume of the macropores in a single porous carbon material particle. According to some embodiments of this application, V1/(V1+V2+V3) is 2%, 4%, 6%, 8%, 11%, 13%, 15%, 17%, 19%, or in a range defined by any two of these values.

In this application, when V1/(V1+V2+V3) ≤ 20%, a proportion of lithium storage sites in the micropores decreases. Compared with hard carbon, the porous carbon material particles do not have an obvious low-voltage plateau and are less likely to generate lithium dendrites during charging at a high current. In some embodiments of this application, 1% < V1/(V1+V2+V3) < 20%. In some embodiments of this application, V1/(V1+V2+V3) < 10%.

According to some embodiments of this application, the negative electrode active material layer includes negative electrode active material particles. The negative electrode active material particle includes at least two types of pores among micropores, mesopores, and macropores, and V1/(V1+V2+V3) < P1/(P1+P2+P3) is satisfied, where a pore size of the micropore < 2 nm, 2 nm ≤ a pore size of the mesopore ≤ 50 nm, and 50 nm < a pore size of the macropore ≤ 500 nm; V1 in cm$^3$/g is a pore volume of the micropores in a single porous carbon material particle, V2 in cm$^3$/g is a pore volume of the mesopores in a single porous carbon material particle, and V3 in cm$^3$/g is a pore volume of the macropores in a single porous carbon material particle; P1 in cm$^3$/g is a pore volume of the micropores in a single negative electrode active material particle, and P2 in cm$^3$/g is a pore volume of the mesopores in a single negative electrode active material particle, and P3 in cm$^3$/g is a pore volume of the macropores in a single negative electrode active material particle.

In this application, a proportion of micropores in the porous carbon material particle is lower than that of micropores in the negative electrode active material particle. This facilitates diffusion of lithium ions from the porous carbon material layer to the negative electrode active material layer, alleviating lithium precipitation on the surface of a negative electrode plate. An excessively high proportion of micropores in the porous carbon material particle is not conducive to the diffusion of lithium ions to the negative electrode active material layer, thereby causing lithium precipitation.

According to some embodiments of this application, P1/(P1+P2+P3) > 25%. An excessively high proportion of micropores in the negative electrode active material particle helps increase the lithium storage capacity but hinders lithium ion diffusion and fast charging. According to some embodiments of this application, P1/(P1+P2+P3) is 27%, 28%, 29%, 30%, 31%, 32%, 33%, 35%, 37%, 39%, or in a range defined by any two of these values.

According to some embodiments of this application, coating mass per unit area of the porous carbon material layer is less than coating mass per unit area of the negative electrode active material layer. In some embodiments of this application, thickness of the porous carbon material layer is less than thickness of the negative electrode active material layer. Compacted density is one of the key parameters that affect the volumetric energy density of an electrode assembly. To provide a higher volumetric energy density, a high compacted density may be set for the electrode plate. In this application, mass of the porous carbon material layer is less than that of the negative electrode active material layer. This helps increase the overall compacted density of a composite layer while lessening the impact on the fast charging performance and cycling performance of the electrochemical apparatus. Lithium precipitation occurs mainly on the surface of the electrode plate, so the outer porous carbon material layer may be a thin layer covering the negative electrode active material layer. When the coating mass of the porous carbon material layer is greater than that of the negative electrode active material layer, the overall compacted density of the composite layer may be reduced.

According to some embodiments of this application, the porous carbon material particle includes one or more selected from the group consisting of activated carbon, hard carbon, soft carbon, carbon fiber, and carbon nanotubes.

According to some embodiments of this application, the negative electrode active material layer includes negative electrode active material particles. In some embodiments, the negative electrode active material particle includes one or more of hard carbon and graphite.

In this application, the negative electrode active material particle refers to a material allowing lithium ions to be intercalated and deintercalated. It should be understood that for ease of description, this application defines the porous carbon material layer, the porous carbon material particles, the negative electrode active material layer, and the negative electrode active material particles; however, the porous carbon material particles can also allow lithium ions to be intercalated and deintercalated.

During charging at a high rate, lithium precipitation tends to occur on the surface of the electrode plate because it is generally difficult to complete rapid lithiation for a conventional single-layer graphite negative electrode or single-layer hard carbon negative electrode. Compared with graphite, hard carbon has a higher reversible specific capacity, typically 500 mAh/g to 1000 mAh/g. However, more than half of the lithium storage capacity of the hard carbon material depends on the low-voltage plateau (0.1 V-0 V, vs. Li$^+$/Li), which approaches the oxidation and reduction potential of Li/Li$^+$ and is closer to the lithium precipitation potential compared with the voltage plateau of graphite. Therefore, during charging at a high current, lithium dendrites are more likely to precipitate on a hard carbon electrode plate than on a graphite electrode plate. In practical application, the high-rate charging performance of hard carbon is limited. In addition, lithium dendrites deposited on the surface of a hard carbon negative electrode plate will cause partial deformation of the electrode assembly and even safety problems. In this application, a porous carbon material layer is stacked on the surface of the negative electrode active material layer, so that a special porous structure of the porous carbon material particles is utilized to enhance the diffusion of lithium ions, effectively alleviating the lithium precipitation problem during use of a single-layer hard carbon or graphite negative electrode.

In some embodiments of this application, the porous carbon material layer includes porous carbon material particles, and the negative electrode active material layer includes hard carbon. The porous carbon material layer is made of porous carbon material particles with multi-level porous structure where different types of pores at least partially communicate with each other, so that lithium ions can be diffused by way of macropores and mesopores. Macropores and mesopores have a wide diffusion channel and reduce the diffusion resistance for lithium ions entering micropores, improving the high-rate fast charging performance and retarding lithium precipitation on the surface of the electrode plate. Therefore, the porous carbon material particles are obviously superior to the negative electrode active material of hard carbon layer in terms of diffusion kinetics or fast charging performance. This significantly alleviates the problem of lithium precipitation during fast charging for a negative electrode made of single-layer hard carbon, and achieves an advantageous combination of high capacity, high energy density, and fast charging performance. In addition, when lithium precipitation on the surface of the electrode plate is alleviated, the fast charging performance is improved, and deformation of the electrode assembly is suppressed, improving the appearance and safety performance of the electrochemical apparatus.

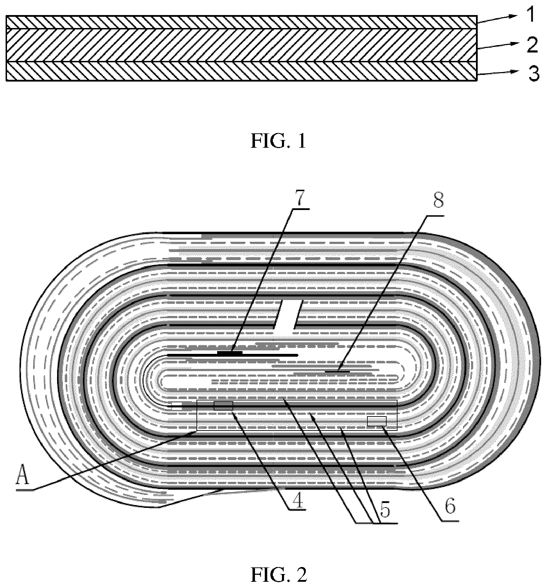

According to some embodiments of this application, the negative electrode further includes a negative electrode current collector, and the negative electrode active material layer is located between the porous carbon material layer and the negative electrode current collector. As shown in FIG. 1, some embodiments of this application provide a negative electrode. The negative electrode includes a negative electrode current collector, a porous carbon material layer (first layer), and a negative electrode active material layer (second layer). It should be understood that although the first layer and the second layer are provided on one side of the negative electrode current collector as shown in FIG. 1, this is merely an example, and the first layer and the second layer may alternatively be provided on two sides of the negative electrode current collector.

According to some embodiments of this application, the negative electrode further includes a conductive layer located between the negative electrode active material layer and the negative electrode current collector. In some embodiments, the conductive layer includes a conductive material, where the conductive material includes one or more selected from the group consisting of conductive carbon black, carbon nanofibers, carbon nanotubes, and graphene. With the conductive layer being provided between the negative electrode active material layer and the negative electrode current collector, the adhesion force between the negative electrode active material layer and the negative electrode current collector can be improved, improving the electrical contact.

According to some embodiments of this application, the electrochemical apparatus of this application further includes a separator, and the porous carbon material layer is located between the separator and the negative electrode active material layer. According to some embodiments of this application, the electrochemical apparatus of this application further includes a separator, where the porous carbon material layer is in contact with the separator.

According to some embodiments of this application, the porous carbon material layer and the negative electrode active material layer each further independently include a conductive agent and/or a binder. In some embodiments, the conductive agent includes one or more selected from the group consisting of conductive carbon black, acetylene black, carbon nanotubes, ketjen black, conductive graphite, and graphene. In some embodiments, a mass percentage of the conductive agent to the porous carbon material layer or negative electrode active material layer is 0.5% to 10%. In some embodiments, the binder includes one or more selected from the group consisting of polyvinylidene fluoride, vinylidene fluoride-hexafluoropropylene copolymer, polyamide, polyacrylonitrile, polypropylene, polyacrylic acid, polyacrylate, sodium carboxymethylcellulose, polyvinylpyrrolidone, polyvinyl ether, polymethyl methacrylate, polytetrafluoroethylene, polyhexafluoropropylene, and styrene-butadiene rubber. In some embodiments, a mass percentage of the binder in the porous carbon material layer or negative electrode active material layer is 0.5% to 10%.

The negative electrode of this application may be prepared using a method known in the art. Usually, negative electrode active material particles, an optional conductive agent (for example, a carbon material such as carbon black and metal particles), a binder (for example, SBR), an optional additive (for example, a PTC thermistor material), and other materials are mixed and dispersed in a solvent (for example, deionized water), and the mixture is stirred to uniformity and evenly applied on a negative electrode current collector, followed by drying, to obtain a negative electrode with a negative electrode active material layer. Then, porous carbon material particles, an optional conductive agent (for example, a carbon material such as carbon black and metal particles), a binder (for example, SBR), an optional additive (for example, a PTC thermistor material), and other materials are mixed and dispersed in a solvent (for example, deionized water), and the mixture is stirred to uniformity and evenly applied on the negative electrode active material layer, to obtain a negative electrode with a porous carbon material layer and the negative electrode active material layer. A material such as metal foil or a porous metal plate may be used as the negative electrode current collector.

According to some embodiments of this application, the electrochemical apparatus of this application further includes a positive electrode. Material particles, composition, and manufacturing methods of the positive electrode which can be used in some embodiments of this application include any technologies disclosed in the prior art.

According to some embodiments of this application, the positive electrode includes a positive electrode current collector and a positive electrode active material layer located on the positive electrode current collector. According to some embodiments of this application, the positive electrode active material particle includes but is not limited to one or more selected from the group consisting of lithium cobalt oxide ($LiCoO_2$), lithium nickel cobalt manganate (NCM), lithium nickel cobalt aluminate (NCA), lithium ferrous phosphate ($LiFePO_4$), and lithium manganate oxide ($LiMn_2O_4$).

According to some embodiments of this application, the positive electrode active material layer further includes a binder and optionally a conductive material. The binder strengthens the adhesion between the positive electrode active material particles and adhesion between the positive electrode active material and the positive electrode current collector. In some embodiments, the binder includes polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene 1,1-difluoride, polyethylene, polypropylene, styrene-butadiene rubber, acrylic styrene-butadiene rubber, epoxy resin, nylon, or the like.

According to some embodiments of this application, the conductive material includes but is not limited to a carbon-based material, a metal-based material, a conductive polymer, and a mixture thereof. In some embodiments, the carbon-based material is selected from carbon black, acetylene black, ketjen black, carbon fiber, carbon nanotube, or any combination thereof. In some embodiments, the metal-based material is selected from copper, nickel, aluminum, or silver. In some embodiments, the conductive polymer is a polyphenylene derivative.

According to some embodiments of this application, the positive electrode current collector may include but is not limited to aluminum.

According to some embodiments of this application, the electrochemical apparatus of this application further includes an electrolyte. The electrolyte that can be used in some embodiments of this application may be an electrolyte known in the prior art.

7

In some embodiments, the electrolyte includes an organic solvent, a lithium salt, and an additive. The organic solvent of the electrolyte according to this application may be any organic solvent known in the prior art which can be used as a solvent of the electrolyte. An electrolyte salt used in the electrolyte according to this application is not limited, and may be any electrolyte salt known in the prior art. The additive of the electrolyte according to this application may be any additive known in the prior art which can be used as an additive of the electrolyte.

In some embodiments, the organic solvent includes but is not limited to ethylene carbonate (EC), propylene carbonate (PC), diethyl carbonate (DEC), ethyl methyl carbonate (EMC), dimethyl carbonate (DMC), propylene carbonate, or ethyl propionate.

In some embodiments, the lithium salt includes but is not limited to lithium hexafluorophosphate (LiPF$_6$), lithium tetrafluoroborate (LiBF$_4$), lithium difluorophosphate (LiPO$_2$F$_2$), lithium bistrifluoromethanesulfonimide LiN(CF$_3$SO$_2$)$_2$(LiT-FSI), lithium bis(fluorosulfonyl)imide Li(N(SO$_2$F)$_2$)(LiFSI), lithium bis(oxalate) borate LiB(C$_2$O$_4$)$_2$(LiBOB), or lithium difluoro(oxalato)borate LiBF$_2$(C$_2$O$_4$)(LiDFOB).

In some embodiments, a concentration of the lithium salt in the electrolyte is approximately 0.5 mol/L to 3 mol/L, approximately 0.5 mol/L to 2 mol/L, or approximately 0.8 mol/L to 1.5mol/L.

The separator used in the electrochemical apparatus according to this application is not particularly limited to any material or shape, and may be based on any technology disclosed in the prior art. In some embodiments, the separator includes a polymer or an inorganic substance formed by a material stable to the electrolyte of this application.

For example, the separator may include a substrate layer and a surface treatment layer. The substrate layer is a non-woven fabric, membrane, or composite membrane having a porous structure, and a material of the substrate layer includes one or more selected from the group consisting of polyethylene, polypropylene, polyethylene terephthalate, and polyimide. Specifically, a polypropylene porous membrane, a polyethylene porous membrane, a polypropylene non-woven fabric, a polyethylene non-woven fabric, or a polypropylene-polyethylene-polypropylene porous composite membrane may be selected.

The surface treatment layer is provided on at least one surface of the substrate layer, and the surface treatment layer may be a polymer layer or an inorganic substance layer, or may be a layer formed by a mixed polymer and an inorganic substance.

The inorganic substance layer includes inorganic particles and the binder. The inorganic particles include one or more selected from the group consisting of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder includes one or more selected from the group consisting of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, and polyhexafluoropropylene.

The polymer layer includes a polymer, and a material of the polymer includes one or more selected from the group consisting of polyamide, polyacrylonitrile, an acrylate polymer, polyacrylic acid, polyacrylate, polyvinylpyrrolidone, polyvinyl ether, polyvinylidene fluoride, and poly(vinylidene fluoride-hexafluoropropylene).

The electrochemical apparatus according to this application includes any apparatus in which electrochemical reactions take place. Specific examples of the apparatus include all kinds of primary batteries and secondary batteries. Particularly, the electrochemical apparatus is a lithium secondary battery, including a lithium metal secondary battery, a lithium-ion secondary battery, a lithium polymer secondary battery, or a lithium-ion polymer secondary battery.

A second aspect of this application provides an electronic apparatus including the electrochemical apparatus according to the first aspect.

The electronic device or apparatus in this application is not particularly limited. In some embodiments, the electronic device of this application includes, but is not limited to: a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

The following further describes this application with reference to examples. It should be understood that these examples are merely used to describe this application but not to limit the scope of this application.

**Test methods**

1. Test on pore size distribution and pore volume of materials

(1) Sample pretreatment

Porous carbon material particle:

a. Negative electrode plates were removed from fully discharged lithium-ion batteries, cleaned, and then dried. Powder was scraped off surface layers (about 10 $\mu$m thick) of these electrode plates. Heat treatment was performed on the powder for 4 hours in an argon-protected tube furnace at 400°C to get rid of the binder adhered to the material surface, and then the obtained material sample was toasted at 150°C for 12 hours; or
b. A porous carbon material sample was toasted at 150°C for 12 hours.

Negative electrode active material particle:

a. Negative electrode plates were removed from fully discharged lithium-ion batteries, cleaned, and then dried. Powder was scraped off a side (about 10 $\mu$m thick) of these electrode plates close to the current collector. Heat treatment was performed on the powder for 4 hours in an argon-protected tube furnace at 400°C to get rid of the binder adhered to the material surface, and then the obtained material sample was toasted at 150°C for 12 hours; or
b. An active material sample was toasted at 150°C for 12 hours.

(2) Test method

The material sample processed in (1) was tested in a gas adsorption instrument at -196°C to obtain an adsorption-desorption isotherm. The volume of $N_2$ gas measured at a relative pressure of 0.99 for adsorption was equivalent to the total pore volume.
In the range of micropores, the volume distribution corresponding to different pore sizes was obtained by analyzing the adsorption isotherm with the Horvath-Kawazoe (HK) method.
The HK expression of a slit-shaped micropore was:

$$RT \ln(P/P_0) = \mathrm{K} \frac{N_S A_S + N_A A_A}{\sigma^4 (l-d)}$$

$$\times \left[ \frac{\sigma^4}{3(l-d/2)^3} - \frac{\sigma^{10}}{9(l-d/2)^9} - \frac{\sigma^4}{3(d/2)^3} + \frac{\sigma^{10}}{9(d/2)^9} \right]$$

The HK expression of a cylindrical micropore was:

$$RT \ln(P/P_0) = \frac{3}{4} \pi K \left[ \frac{N_S A_S + N_A A_A}{d^4} \right]$$

$$\times \sum_{k=0}^{\infty} \left[ \frac{1}{2k+1} \left[ 1 - \frac{d}{r_P} \right]^{2k} - \left[ \frac{21}{32} \alpha_k \left[ \frac{d}{r_P} \right]^{10} - \beta_k \left[ \frac{d}{r_P} \right]^4 \right] \right]$$

Where:

R denotes the gas constant;
P denotes the adsorption equilibrium pressure, in mmHg;
P0 denotes the saturated vapor pressure of adsorbate at the adsorption temperature, in mmHg;
K denotes the Avogadro constant;
$N_s$ denotes the number of atoms per unit area of adsorbent, in pieces/cm$^2$;
$N_a$ denotes the number of atoms per unit area of adsorbate, in pieces/cm$^2$;
$A_s$ and $A_A$ denote the Lennard-Jones potential constant of the adsorbent and the adsorbate respectively;

$\sigma$ denotes the internuclear distance between the gas atom and the surface with zero interaction energy;

$l$ denotes the internuclear distance between two plane layers of a slit-shaped pore;

$d$ denotes the sum of diameters of an adsorbent atom and an adsorbate atom;

$R_p$ denotes the radius of a cylindrical micropore; and

$\alpha_k$ and $\beta_k$ are calculated from the r function of k derived by Evertt and Powl. With a range of effective pore sizes selected, micropore distribution can be calculated using an HK formula regarding adsorption curves measured by the adsorption instrument in a corresponding range of relative pressures, to obtain the adsorption amount of micropores in each pore size.

In the ranges of mesopores and macropores, different pore sizes correspond to different pore volumes. The Barrett-Joyner-Halenda(BJH) method was used for analysis of nitrogen adsorption-desorption curves to obtain the integral distribution of pore volumes varying with pore sizes. Analysis on pore sizes of mesopores and macropores was based on macro-thermodynamics, mainly the capillary condensation theory. The calculation method was as follows: determining a pore size corresponding to pressure by using the Kelvin equation, calculating a thickness of the adsorption layer by using the Holsa equation, and assuming that nitrogen molecules adsorbed in pores exist at a density of liquid nitrogen; and based on the measured adsorption-desorption curves (usually, the relative pressure ranges from $10^{-4}$ to 0.995), calculating the pore volume-pore size distribution, total pore volume, and average pore size using the successive calculation method.

Whether pores communicate with each other was analyzed using a high-resolution transmission electron microscope (TEM, model: Talos F200X), with the operating voltage of 120 kV. The communication proportion was obtained through statistics. More than 10 representative regions were selected from an enlarged electron image, a proportion of the quantity of communicating pores was counted, and an average value was obtained.

2. Lithium precipitation test

In a constant temperature room, a battery cell was charged to a charge cut-off voltage at different rates, charged to 0.05C at a constant voltage, and then discharged to a cut-off voltage at 1C. After 10 cycles of such charging and discharging, the negative electrode plate was removed, and whether lithium precipitation occurs was observed.

The degree of lithium precipitation was determined based on a contamination state of the separator in contact with the negative electrode removed from the fully-charged battery. If the separator in contact with the negative electrode was in white and area in gray was <2%, it was determined that no lithium precipitation occurred. If a large portion of the separator in contact with the negative electrode was in white but some positions could be observed in gray and the area in gray was 2% to 20%, it was determined that lithium precipitation was slight. If part of the separator in contact with the negative electrode was in white but some positions were still observed in gray and the area in gray was 20% to 60%, it was determined that lithium precipitation occurred. If a large portion of the separator in contact with the negative electrode was in gray and the area in gray was >60%, it was determined that lithium precipitation was serious.

3. Cycling swelling rate test

In a constant temperature room, a battery cell was charged to a charge cut-off voltage at a specified rate, charged to 0.05C at a constant voltage, and then discharged to a cut-off voltage at 1C. 1000 cycles of such charging and discharging were performed. A method for testing the deformation of the battery cell during cycling was as follows: fixing the battery cell with parallel splints, applying a pressure of 700 g, and measuring the thickness of the battery cell. Cycling swelling rate = (final thickness - initial thickness)/initial thickness $\times$ 100%.

4. Compacted density test

Compacted density = mass of coating/thickness of coating. Multiple electrode plate samples with the same area were prepared, substances of the coating on the current collector side of these electrode plates were obtained, and mass of the coating on one side of the current collector of these electrode plates was measured. Thickness of the coating on one side of the current collector of these electrode plates was measured using SEM. Then, the compacted density of the coating was calculated.

**Examples and comparative examples**

Preparation of porous carbon material particle

Porous carbon material particles were prepared using a template method, where a template (namely, a pore-foaming agent) was used to make pores and control pore sizes, so as to form a porous carbon skeleton structure. The preparation steps were as follows.

(1) A mixed solution of a pore-forming agent and a carbon source was prepared. After the solvent was evaporated, the carbon source wrapped with the pore-forming agent was left. The pore-forming agent included polymers, acidic compound particles, alkaline compound particles, and the like. The carbon source included polymers, a biomass raw material, and the like.
(2) Under nitrogen protection, the carbon source wrapped with the pore-forming agent was calcined at a temperature of 600°C to 1600°C. The carbon source precursor was pyrolyzed into a carbon material.
(3) The pore-forming agent was removed from the carbon material through alkali washing or acid washing.
(4) Post-treatments such as impurity removal, drying, grinding, and sieving by particle size were performed on the powder without the pore-forming agent.

Sizes and proportions of macropores and mesopores can be controlled based on the size and amount of pore-forming agent added. The structure for communication between multi-level pores was primarily controlled by the distribution uniformity of pore-forming agents for different sizes. A proportion of micropores can be controlled by adjusting the carbonization temperature.

**Example 1**

1. Preparation of negative electrode plate

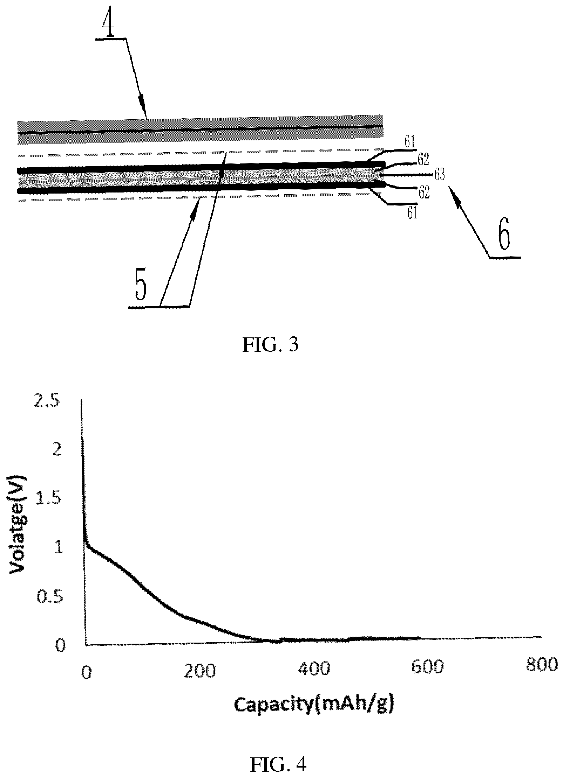

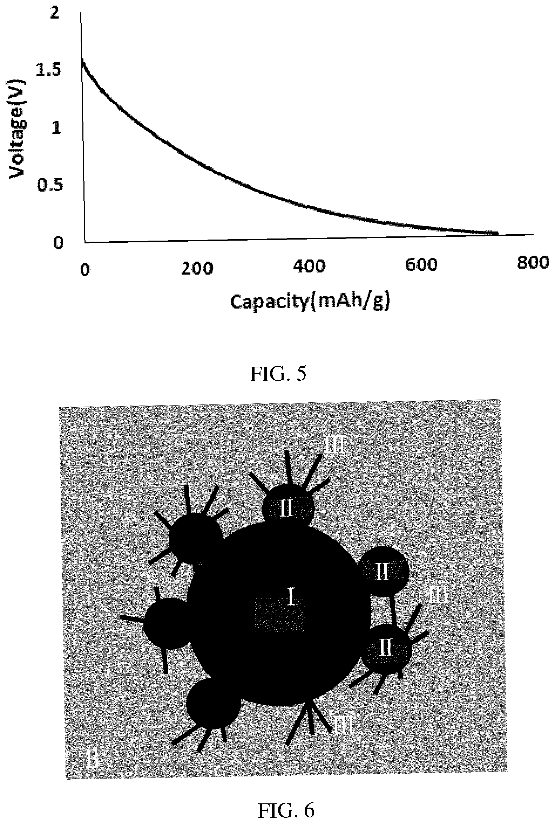

Hard carbon, styrene-butadiene rubber (SBR), and sodium carboxymethyl cellulose (CMC) were mixed at a weight ratio of 97:2:1, a specified amount of deionized water was added, and the mixture was evenly stirred to obtain a slurry. The slurry was applied on copper foil according to a surface density of 60 mg/1540 mm$^2$, followed by vacuum-drying at 80°C, to obtain a second coating (negative electrode active material layer). Then, porous carbon material particles with a multi-level porous structure, styrene-butadiene rubber (SBR), and sodium carboxymethyl cellulose (CMC) were mixed at a weight ratio of 97:2:1, a specified amount of deionized water was added, and the mixture was evenly stirred to obtain a slurry. The slurry was applied on the second coating according to a surface density of 30 mg/1540 mm$^2$ to form a composite coating where the second coating was covered by a first coating (porous carbon material layer). The composite coating was vacuum-dried at 80°C, and a negative electrode plate was obtained after cold pressing, die-cutting, and slitting. FIG. 4 shows the Q-V curve of lithiation of the hard carbon material used in this example, where micropore volume/total pore volume = 32%. The porous carbon particles have a three-level structure composed of micropores, mesopores, and macropores. FIG. 5 shows a Q-V curve, where micropore volume/total pore volume (namely, micropore volume+mesopore volume+macropore volume) = 6%.

2. Preparation of positive electrode plate

A positive electrode active substance LiCoO$_2$, a binder polyvinylidene fluoride (PVDF), and acetylene black were mixed at a mass ratio of 98:1:1, N-methylpyrrolidone (NMP) was added, and the mixture was evenly stirred to obtain a slurry. The slurry was applied on aluminum foil according to a specified surface density, and vacuum-dried at 100°C. A positive electrode plate was obtained after cold pressing, die-cutting, and slitting.

3. Preparation of lithium-ion battery

The positive electrode plate, a separator (PE porous polymer film), and the negative electrode plate were wound into a bare cell, and the bare cell was put into an aluminum-plastic film bag, and then prepared into a lithium-ion battery after processes such as pre-packaging, toasting, electrolyte injection, formation, degassing, and final sealing. The separator includes a substrate film, a ceramic layer, an adhesive layer, and the like. The electrolyte includes lithium hexafluorophosphate and an organic solvent, where a concentration of lithium hexafluorophosphate is 1 mol/L. The organic solvent includes ethylene carbonate (EC), propylene carbonate (PC), diethyl carbonate (DEC), dimethyl carbonate (DMC), ethyl methyl carbonate (EMC), vinylene carbonate (VC), and fluoroethylene carbonate (FEC), where EC:PC:DEC:DMC:EMC:VC:FEC=20:30:20:13:13:2:2.

**Example 2**

The preparation method in this example was the same as that in Example 1, except that for the porous carbon material particles, micropore volume/total pore volume = 14%.

**Example 3**

The preparation method in this example was the same as that in Example 1, except that the porous carbon material particles had a two-level structure of micropores/mesopores and micropore volume/total pore volume = 8%.

**Example 4**

The preparation method in this example was the same as that in Example 1, except that the porous carbon material particles had a two-level structure of mesopores/macropores.

**Example 5**

The preparation method in this example was the same as that in Example 1, except that the porous carbon material particles had a two-level structure of micropores/macropores and micropore volume/total pore volume = 8%.

**Example 6**

The preparation method in this example was the same as that in Example 1, except that graphite was used as the active material of the second coating closer to the negative electrode current collector.

**Example 7**

The preparation method in this example was the same as that in Example 1, except that for the porous carbon material particles, micropore volume/total pore volume = 20%.

**Example 8**

The preparation method in this example was the same as that in Example 1, except that for the porous carbon material particles, micropore volume/total pore volume = 37%, higher than a value of micropore volume/total pore volume of hard carbon.

**Example 9**

The preparation method in this example was the same as that in Example 1, except that the coating mass of the first coating was 50 mg/1540 mm$^2$, same as that of the second coating.

**Example 10**

The preparation method in this example was the same as that in Example 1, except that the coating mass of the first coating was 60 mg/1540 mm$^2$, greater than the coating mass of 30 mg/1540 mm$^2$ of the second coating.

**Comparative Example 1**

The preparation method in this example was the same as that in Example 1, except that only the second coating closer to the current collector was included, where a second active material was hard carbon and the coating mass was 90 mg/1540 mm$^2$.

**Comparative Example 2**

The preparation method in this example was the same as that in Example 1, except that graphite was used as the second active material.

**Comparative Example 3**

The preparation method in this example was the same as that in Example 1, except that micropores, mesopores, and macropores in the porous carbon material particle did not communicate with each other.

**Comparative Example 4**

The preparation method in this example was the same as that in Example 3, except that micropores and mesopores in the porous carbon material particle did not communicate with each other.

**Comparative Example 5**

The preparation method in this example was the same as that in Example 4, except that mesopores and macropores in the porous carbon material particle did not communicate with each other.

**Comparative Example 6**

The preparation method in this example was the same as that in Example 5, except that micropores and macropores in the porous carbon material did not communicate with each other.

**Table 1**

| | First coating layer | | | | | | Second coating layer | Fast charging performance at 25°C | | | Cycling swelling rate of battery cell |
|---|---|---|---|---|---|---|---|---|---|---|---|
| | Composition type of multi-level porous carbon material particle | In communication or not | Micropore volume $(cm^3/g)$ | Mesopore volume $(cm^3/g)$ | Macropore volume $(cm^3/g)$ | Micropore volume/total pore volume | Micropore volume/total pore volume | Charging at 6C rate | Charging at 7C rate | Charging at 8C rate | 1000 cycles at 7C at 25°C |
| Example 1 | Micropore/mesopore/macropore | Yes | 0.2 | 2.1 | 1 | 6% | 32% | No lithium precipitation | No lithium precipitation | No lithium precipitation | 2.1% |
| Example 2 | Micropore/mesopore/macropore | Yes | 0.5 | 2.1 | 1 | 14% | 32% | No lithium precipitation | No lithium precipitation | Slight lithium precipitation | 2.7% |
| Example 3 | Micropore/mesopore | Yes | 0.19 | 2.1 | 0 | 8% | 32% | No lithium precipitation | No lithium precipitation | No lithium precipitation | 2.2% |
| Example 4 | Mesopore/macropore | Yes | / | 1.5 | 1 | 0 | 32% | No lithium precipitation | No lithium precipitation | No lithium precipitation | 1.9% |
| Example 5 | Micropore/macropore | Yes | 0.19 | 0 | 2.1 | 8% | 32% | No lithium precipitation | No lithium precipitation | No lithium precipitation | 2.1% |
| Example 6 | Micropore/mesopore/macropore | Yes | 0.2 | 2.1 | 1 | 6% | 32% (graphite) | No lithium precipitation | No lithium precipitation | No lithium precipitation | 4% |
| Example 7 | Micropore/mesopore/macropore | Yes | 0.8 | 2.1 | 1 | 20% | 32% | No lithium precipitation | No lithium precipitation | Lithium precipitation | 3.0% |
| Example 8 | Micropore/mesopore/macropore | Yes | 1.8 | 2.1 | 1 | 37% | 32% | No lithium precipitation | Slight lithium precipitation | Lithium precipitation | 3.5% |
| Comparative Example 1 | / | / | / | / | / | / | 32% | Lithium precipitation | Lithium precipitation | Lithium precipitation | 4% |

EP 4 386 908 A1

14

(continued)

| | First coating layer | | | | | | Second coating layer | Fast charging performance at 25°C | | | Cycling swelling rate of battery cell |
|---|---|---|---|---|---|---|---|---|---|---|---|
| | Composition type of multi-level porous carbon material particle | In communication or not | Micropore volume $(cm^3/g)$ | Mesopore volume $(cm^3/g)$ | Macropore volume $(cm^3/g)$ | Micropore volume/total pore volume | Micropore volume/total pore volume | Charging at 6C rate | Charging at 7C rate | Charging at 8C rate | 1000 cycles at 7C at 25°C |
| Comparative Example 2 | / | / | / | / | / | / | 0 (graphite) | Lithium precipitation | Lithium precipitation | Lithium precipitation | 10% |
| Comparative Example 3 | Micropore/ mesopore/ macropore | No | 0.2 | 2.1 | 1 | 6% | 32% | Lithium precipitation | Lithium precipitation | Lithium precipitation | 4.0% |
| Comparative Example 4 | Micropore/ mesopore | No | 0.19 | 2.1 | 0 | 8% | 32% | Lithium precipitation | Lithium precipitation | Lithium precipitation | 4.1% |
| Comparative Example 5 | Mesopore/ macropore | No | 0 | 1.5 | 1 | 0 | 32% | Lithium precipitation | Lithium precipitation | Lithium precipitation | 3.8% |
| Comparative Example 6 | Micropore/ macropore | No | 0.19 | 0 | 2.1 | 8% | 32% | Lithium precipitation | Lithium precipitation | Lithium precipitation | 4.2% |
| Note: The proportion of communicating pores in the multi-level porous carbon materials of Examples 1 to 8 is ≥70%. | | | | | | | | | | | |

Through comparison between Example 1 and Comparative Example 1, and between Example 6 and Comparative Example 2, it can be learned that the double-layer composite coating for the porous carbon material particles with a multi-level porous structure in this application is superior to the single-layer hard carbon coating or graphite coating. Lithium precipitation does not occur when the lithium-ion batteries in Examples 1 and 6 are charged at 8C, while lithium precipitation already occurs when the lithium-ion batteries in Comparative Examples 1 and 2 are charged at 6C. The cycling swelling rates of the battery cells in Examples 1 and 6 are significantly lower than those measured in Comparative Examples 1 and 2.

Through comparison among Example 1, Example 2, Example 7, and Example 8, it can be learned that a proportion of the micropore volume to the total pore volume, that is, a proportion of micropores, of the porous carbon material particles with a multi-level porous structure significantly affects the lithium precipitation situation during fast charging and cycling swelling performance of the lithium-ion batteries. Micropore volume/total pore volume is preferably ≤20%, further preferably < 10%.

Through comparison between Example 7 and Example 8, it can be learned that the lithium precipitation situation of a lithium-ion battery will deteriorate when the proportion of micropore volume to total pore volume of the porous carbon material particles with a multi-level porous structure is higher than that of the hard carbon coating. The main reason is that: the proportion of micropores is excessively high in the first coating, hindering the diffusion of lithium ions to the second coating. A material for the outer layer of the composite coating should have a smaller proportion of micropores, so as to improve the diffusion of lithium ions.

Through comparison among Example 1, Example 3, Example 4, Example 5, and Comparative Example 3 to Comparative Example 6, it can be learned that for the porous carbon material particles with a three-level structure (micropores, mesopores and macropores) or a two-level structure (micropores and mesopores, or micropores and macropores, or macropores and mesopores), if at least a part of pores at various levels communicate with each other, helping prevent lithium precipitation during fast charging of the lithium-ion battery, and dramatically suppressing the swelling of battery cells during cycling. The main reason is that lithium ions diffuse into smaller pores from larger pores, helping reduce diffusion resistance. However, it is difficult to achieve similar improvement effects by using a structure where pores at multiple levels do not communicate.

**Table 2**

| | First coating layer | | Second coating layer | | Composite coating layer | Fast charging performance at 25°C | | | Cycling swelling rate of battery cell |
|---|---|---|---|---|---|---|---|---|---|
| | Coating mass (mg/ 1540 mm$^2$) | Compacted density (g/cm$^3$) | Coating mass (mg/ 1540 mm$^2$) | Compacted density (g/cm$^3$) | Compacted density (g/cm$^3$) | Charging at 6C rate | Charging at 7C rate | Charging at 8C rate | 1000 cycles at 7C at 25°C |
| Example 1 | 30 | 1.0 | 60 | 1.3 | 1.2 | No lithium precipitation | No lithium precipitation | No lithium precipitation | 2.1% |
| Example 9 | 50 | 1.0 | 50 | 1.3 | 1.15 | No lithium precipitation | No lithium precipitation | No lithium precipitation | 2.1% |
| Example 10 | 60 | 1.0 | 30 | 1.3 | 1.1 | No lithium precipitation | No lithium precipitation | No lithium precipitation | 2.1% |

Note: compacted density of composite coating = (compacted density of first coating $\times$ coating mass of first coating + compacted density of second coating $\times$ coating mass of second coating)/(coating mass of first coating + coating mass of second coating).

The compacted density of the composite coating is one of the key parameters that affect the volumetric energy density of battery cells. To achieve a higher volumetric energy density, a higher compacted density may be set for the electrode plate. Through comparison among Example 1, Example 9, and Example 10, it can be learned that: the compacted density of the first coating is lower than that of the second coating, but the compacted density of a coating is mainly determined by properties of the material, and therefore increasing the coating mass of the second coating helps improve the overall compacted density of the composite coating, without affecting the fast charging performance and cycling swelling performance. Lithium precipitation occurs mainly on the surface of an electrode plate, so it is only required that the outer first coating should be a thin layer covering the second coating, without excess coating. When the coating mass of the first coating is greater than that of the second coating, the overall compacted density of the composite coating will be reduced instead.

Although illustrative embodiments have been demonstrated and described, persons skilled in the art should understand that the foregoing embodiments are not to be construed as limiting this application, and that some embodiments may be changed, replaced, and modified without departing from the spirit, principle, and scope of this application.

**Claims**

1. An electrochemical apparatus comprising a negative electrode, wherein the negative electrode comprises a porous carbon material layer and a negative electrode active material layer;

   wherein the porous carbon material layer comprises porous carbon material particles, the porous carbon material particle comprises at least two types of pores among micropores, mesopores, and macropores, and the at least two types of pores communicate with each other, wherein
   a pore size of the micropore is < 2 nm, 2 nm $\leq$ a pore size of the mesopore $\leq$ 50 nm, and 50 nm < a pore size of the macropore $\leq$ 500 nm.

2. The electrochemical apparatus according to claim 1, wherein $V1/(V1+V2+V3) \leq 20\%$, wherein V1 in $cm^3/g$ is a pore volume of the micropores in the porous carbon material particle, V2 in $cm^3/g$ is a pore volume of the mesopores in the porous carbon material particle, and V3 in $cm^3/g$ is a pore volume of the macropores in the porous carbon material particle.

3. The electrochemical apparatus according to claim 2, wherein $V1/(V1+V2+V3) \leq 10\%$.

4. The electrochemical apparatus according to claim 1, wherein the negative electrode active material layer comprises negative electrode active material particles, the negative electrode active material particle comprises at least two types of pores among micropores, mesopores, and macropores, and $V1/(V1+V2+V3) < P1/(P1+P2+P3)$ is satisfied, wherein

   V1 in $cm^3/g$ is a pore volume of the micropores of the porous carbon material particle, V2 in $cm^3/g$ is a pore volume of the mesopores of the porous carbon material particle, and V3 in $cm^3/g$ is a pore volume of the macropores of the porous carbon material particle; and
   P1 in $cm^3/g$ is a pore volume of the micropores in the negative electrode active material particle, P2 in $cm^3/g$ is a pore volume of the mesopores in the negative electrode active material particle, and P3 in $cm^3/g$ is a pore volume of the macropores in the negative electrode active material particle.

5. The electrochemical apparatus according to claim 4, wherein $P1/(P1+P2+P3) > 25\%$.

6. The electrochemical apparatus according to claim 1, wherein the negative electrode satisfies at least one of the following conditions (a) to (d):

   (a) coating mass per unit area of the porous carbon material layer is less than coating mass per unit area of the negative electrode active material layer;
   (b) thickness of the porous carbon material layer is less than thickness of the negative electrode active material layer;
   (c) the porous carbon material particle comprises one or more selected from the group consisting of activated carbon, hard carbon, soft carbon, carbon fiber, and carbon nanotubes; or
   (d) the negative electrode active material layer comprises negative electrode active material particles, wherein the negative electrode active material particle comprises at least one of hard carbon or graphite.

7. The electrochemical apparatus according to claim 1, wherein the negative electrode further comprises a negative electrode current collector, and the negative electrode active material layer is located between the porous carbon material layer and the negative electrode current collector.

8. The electrochemical apparatus according to claim 7, wherein the negative electrode further comprises a conductive layer located between the negative electrode active material layer and the negative electrode current collector.

9. The electrochemical apparatus according to claim 1, wherein the electrochemical apparatus further comprises a separator, and the porous carbon material layer is located between the separator and the negative electrode active material layer.

10. The electrochemical apparatus according to claim 9, wherein the porous carbon material layer is in contact with the separator.

11. An electronic apparatus comprising the electrochemical apparatus according to any one of claims 1 to 10.

FIG. 1

FIG. 2

FIG. 3

FIG. 4

EP 4 386 908 A1

FIG. 5

FIG. 6

22

## INTERNATIONAL SEARCH REPORT

| | International application No. |
|---|---|
| | **PCT/CN2021/112520** |

**A. CLASSIFICATION OF SUBJECT MATTER**

H01M 4/62(2006.01)i;  H01M 4/133(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; WPABSC; VEN; ENTXTC; ENTXT; CNKI: 电池, 负极, 阳极, 多孔碳, 活性材料, 微孔, 介孔, 大孔, 连通, 孔容, battery, negative electrode, anode, porous carbon, active material, micropore, mesopore, macropore, connectivity, pore volume

**C. DOCUMENTS CONSIDERED TO BE RELEVANT**

| Category* | Citation of document, with indication, where appropriate, of the relevant passages | Relevant to claim No. |
|---|---|---|
| Y | CN 112750983 A (HEFEI GUOXUAN HIGH-TECH POWER ENERGY CO., LTD.) 04 May 2021 (2021-05-04) description, paragraphs 2 and 30-106, and figures 1-2 | 1-3, 6-11 |
| Y | CN 106882783 A (ZHONGKE PAISI ENERGY STORAGE TECHNOLOGY CO. LTD.) 23 June 2017 (2017-06-23) claims 1-10, and description, paragraphs 6-29, and figure 1 | 1-3, 6-11 |
| Y | CN 108461755 A (UNIVERSITY OF SCIENCE AND TECHNOLOGY OF CHINA) 28 August 2018 (2018-08-28) description, paragraphs 5-87, and figures 1-2 | 1, 6-11 |
| A | CN 111213260 A (MICROVAST POWER SYSTEMS (HUZHOU) CO., LTD.) 29 May 2020 (2020-05-29) entire document | 1-11 |
| A | JP 2001266850 A (HORIKIRIGAWA, K. et al.) 28 September 2001 (2001-09-28) entire document | 1-11 |

☐ Further documents are listed in the continuation of Box C.       ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 April 2022** | **28 April 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/112520**

| Patent document cited in search report | | | Publication date (day/month/year) | Patent family member(s) | | | Publication date (day/month/year) |
|---|---|---|---|---|---|---|---|
| CN | 112750983 | A | 04 May 2021 | None | | | |
| CN | 106882783 | A | 23 June 2017 | CN | 106882783 | B | 30 October 2018 |
| CN | 108461755 | A | 28 August 2018 | CN | 108461755 | B | 07 May 2021 |
| CN | 111213260 | A | 29 May 2020 | US | 2020243841 | A1 | 30 July 2020 |
| | | | | EP | 3669409 | A1 | 24 June 2020 |
| | | | | WO | 2019033338 | A1 | 21 February 2019 |
| JP | 2001266850 | A | 28 September 2001 | JP | 4430778 | B2 | 10 March 2010 |

Form PCT/ISA/210 (patent family annex) (January 2015)